# EUROPEAN PATENT SPECIFICATION

(11) **EP 1 417 883 B1**
(45) Date of publication and mention of the grant of the patent: **09.05.2007**
(21) Application number: 03024796.9
(22) Date of filing: 30.10.2003
(51) Int. Cl.: A01K 7/06, A01K 39/02

(54) **Animal feeding assembly**
Zusammensetzung zum Füttern von Tieren
Ensemble pour nourrir des animaux

(30) Priority: 06.11.2002 GB 0225841; 25.06.2003 US 606307
(43) Date of publication of application: 12.05.2004
(73) Proprietor: Aquaflow Laboratory Products Limited, Hereford, Herefordshire HR4 9SS (GB)
(72) Inventor: Chalk, Edwin Albert James, Abbots Langley Hertfordshire WD5 0AZ (GB)
(74) Representative: Jackson, Derek Charles

(56) References cited:
- US-A- 3 838 664
- US-A- 3 958 535
- US-A- 4 022 159
- US-A- 5 816 194
- US-A- 5 884 583

## Description

This invention relates to an animal feeding assembly for dispensing a liquid from a container to a mouth of an animal, on demand of the animal.

The invention is particularly, but not exclusively, applicable to an animal feeding assembly for supplying water, or other liquid, to a laboratory animal, such as a rabbit, primate, mouse or rat, in a cage.

It is known to supply caged animals in a laboratory with water provided in an inverted bottle fitted with a metal spout. As water is drawn by the animal from the bottle, a vacuum forms inside the bottle. When such a vacuum becomes great enough, air is drawn into the bottle through the spout to relieve the vacuum. However, such indrawn air is also accompanied by residual water in the spout which has been in contact with the mouth of the animal. Such air and water also contain micro-organisms and food debris from the mouth of the animal, which rapidly contaminate the water, rendering it unfit for the animal to drink. As a result, the entire assembly has to be regularly cleaned, sterilised and replenished, for example twice a week.

Although the cleaning procedure can be mechanised, it is expensive, being wasteful of water and also involving the use of corrosive and aggressive chemicals and steam sterilising equipment.

It is also known to provide automated watering systems in which water is piped around a building to valves provided in the cages. However, flow rates are very slow and the water is readily contaminated unless flushed away. This is very wasteful of water.

It is an object of the present invention to overcome or minimise these problems.

According to the present invention there is provided an animal feeding assembly for dispensing a liquid from a container to a mouth of an animal, on demand of the animal, wherein the assembly comprises: a sealed container at least partially filled with the liquid, the container including a connecting tube extending from the container, the connecting tube containing a seal means in the form of a membrane; and an animal feeding valve arrangement fitted thereto, the valve arrangement comprising a first tube portion piercing the membrane of the seal means of the container to receive the liquid from the container, a second tube portion provided with an end adapted to be used by the animal, and a valve means adapted to be actuated by the animal to permit the flow of the liquid from the container to the end of the second tube portion.

The container may be of rigid form and include a filtered vent, for example a Hepa filter, to relieve a vacuum created within the container as the liquid is dispensed therefrom to the animal.

Alternatively, the container may be adapted to collapse under atmospheric pressure as the liquid is dispensed therefrom to the animal. For example, the container may be made of a rigid material provided with a pleated surface. Alternatively, the container may be of bag-form made of a flexible material.

The container may be made of a non-toxic material for example selected from a plastics material, rubber, treated paper and cardboard, cloth and fibre materials.

The container may be hermetically sealed.

The container may be provided within an outer wrapping to maintain sterility of the container prior to use.

The container may be made of a material selected so as to be capable of being sterilised such as by means of steam or by subjecting the container to radiation, such as gamma radiation.

The container may be provided with means for suspending it from support means. Such means for suspending the container may in the form of one or more sealed apertures therethrough, which may be provided at an opposite end of the container to the seal means by the first tube portion of the valve arrangement.

The membrane of the seal means of the container, pierced by the first tube of the valve, is arranged to be pierced without leakage of the liquid occurring between the seal means of the container and an exterior of the first tube portion, the first tube portion forming a water-tight fit in the pierced seal means.

The seal means of the container may be covered with a removable cap until access thereto for piercing is required.

The first tube portion of the valve arrangement may have an end thereof shaped to form at least one sharply angled region, which sharply angled region facilitates piercing of the membrane of the seal means of the container by the first tube portion.

The first tube portion may be coaxial with, or disposed at an angle to, the second portion of the valve arrangement.

The valve arrangement, or at least one of the first and second tube portions thereof, may be dimensioned according to size and/or drinking requirements, such as rate of flow or volume of the liquid, of the animal by which it is to be used.

The first and second tube portions of the valve arrangement may be formed as an integral unit. Alternatively, the first and second portions of the valve arrangement may be formed separately and assembled together, for example by threaded engagement.

The valve arrangement may be adapted to be secured directly or indirectly to a structure, such as a cage, associated with the animal. Such securing may be by one or more clips, ferrules, threaded caps, grommets and washers and/or by way of a bracket or cradle.

The container may be arranged to be secured to the structure.

A finger grip arrangement may be provided on the valve arrangement to facilitate fitting of the valve arrangement to the container. The finger grip arrangement may be concentrically arranged on the valve arrangement and may comprise two threadedly-engaging portions which may be positioned one at each side of a support. Such support may be a portion of a cage for containing the animal, or a bracket or cradle such as for securing to a cage for containing the animal.

The valve means may comprise a pin having a head portion engaging an apertured seal, and a spring applying force to maintain engagement of the head portion of the spring with the apertured seal, the pin having an end extending from the second tube portion of the valve means and adapted to be contacted by the animal to raise the head portion from the seal against force of the spring to permit flow of the liquid through the valve arrangement from the container.

Alternatively, the valve means may comprise a non-return valve actuated by the animal and adapted to permit flow of the liquid through the valve arrangement from the container towards the animal but to prevent any flow of the liquid from the animal to the container.

The first and second tube portions of the valve arrangement may be made of metal, such as stainless steel, or plastics material.

The liquid in the sealed container may be water, which may be sterilised water, or may be a treatment liquid such as comprising medication or experimental test material.

The animal may be a laboratory animal or other domestic animal.

By means of the present invention, liquid such as water is supplied from the sealed container to the animal on demand, with minimal risk of back-contamination of remaining liquid in the container. This is achieved by means of the sealed container and the associated valve arrangement with its membrane-piercing facility. Collapsing of a flexible container under atmospheric pressure, or filter venting of a rigid container, as the liquid is withdrawn therefrom prevents formation of a vacuum inside the container and minimises any tendency for air and contaminants to be drawn back into the container.

For a better understanding of the present invention and to show more clearly how it may be carried into effect, reference will now be made by way of example to the accompanying drawings in which:
Figure 1 is a perspective view of an animal feeding assembly according to the present invention, prior to assembly;
Figure 2 is a cross-sectional view of a valve arrangement forming part of the animal feeding assembly of Figure 1;
Figure 3 is a perspective view of the animal feeding assembly of Figure 1, after assembly;
Figure 4 is a perspective view of an alternative embodiment of a first tube portion of a valve arrangement forming part of the animal feeding assembly of Figure 1;
Figure 5 is a perspective view of a disassembled alternative embodiment of a valve arrangement forming part of the animal feeding assembly of Figure 1, for securing in an aperture in a support;
Figure 6 is a side view of the valve arrangement of Figure 5, after assembly in the aperture in the support;
Figure 7 is a cross-sectional view of a further embodiment of a valve arrangement forming part of an animal feeding assembly according to the present invention;
Figure 8 is a side view of an alternative embodiment of a container forming part of an animal feeding assembly according to the present invention in a first configuration;
Figure 9 is a side view of the container of Figure 8 in a second configuration; and
Figure 10 is a side view of a further embodiment of a container forming part of an animal feeding assembly according to the present invention.

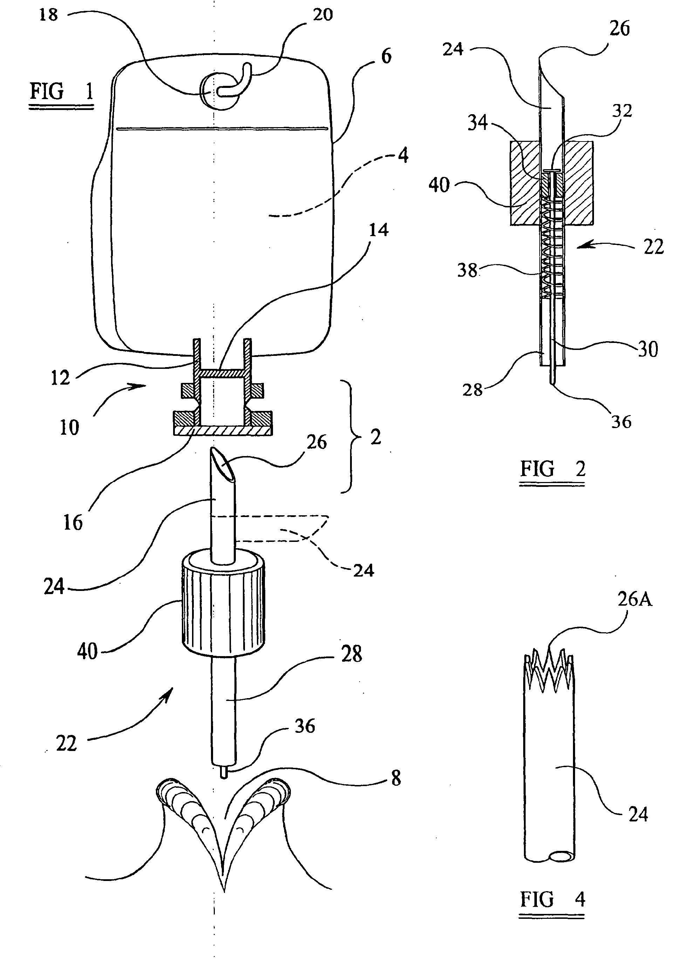

Referring to Figure 1, an animal feeding assembly 2 is provided for dispensing a liquid 4, such as sterilised water or a treatment liquid such as comprising medication or experimental test material, from a container 6 to a mouth 8 of an animal, on demand of the animal. The animal may be in a cage in a laboratory. The container 6 is sealed and is of bag-form. It is formed of very flexible plastics material such that as liquid 4 is removed therefrom, the container collapses under atmospheric pressure. The container 6 is suitably of a form such as is known to be used for enclosing fluids for medical applications and the plastics material from which it is made is suitably selected so as to be capable of being sterilised, for example by means of steam or by subjection to radiation such as gamma radiation.

The container 6 may be provided within an outer wrapping (not shown) to maintain sterility of the container prior to use.

A seal means 10 is provided on the bag-form container 6 and comprises a plastics connecting tube 12 incorporating a thin plastics membrane or septum 14. The end of the connecting tube is covered by a cap 16, which can be removed by subjecting it to a twisting motion.

The container 6 has one or more sealed apertures 18 through it at an opposite end to the seal means 10, to enable the container 6 to be suspended from a support means 20.

An animal feeding valve arrangement 22 is provided comprising a first tube portion 24 having an end shaped to form one or more sharply angled or pointed regions 26. The valve arrangement 22 has a second tube portion 28 for accommodation by the mouth 8 of the animal.

The first and second tube portions 24, 28 may be formed as an integral unit, or formed separately and assembled together. They may comprise metal, such as stainless steel, or a suitable plastics material.

As shown in Figure 2, the valve arrangement 22 incorporates a valve means, which suitably comprises a pin 30, such as of stainless steel, having a head portion 32 engaging an apertured seal 34, such as of rubber. The pin 30 has an end 36 extending from the second tube portion 28 of the valve means 22 and adapted to be contacted by the mouth 8 of the animal to raise the head portion 32 from the seal 34, against force of a spring 38, which suitably comprises stainless steel. The valve means is thereby opened to permit flow of liquid through it.

The valve arrangement 22 is provided with a finger grip arrangement 40.

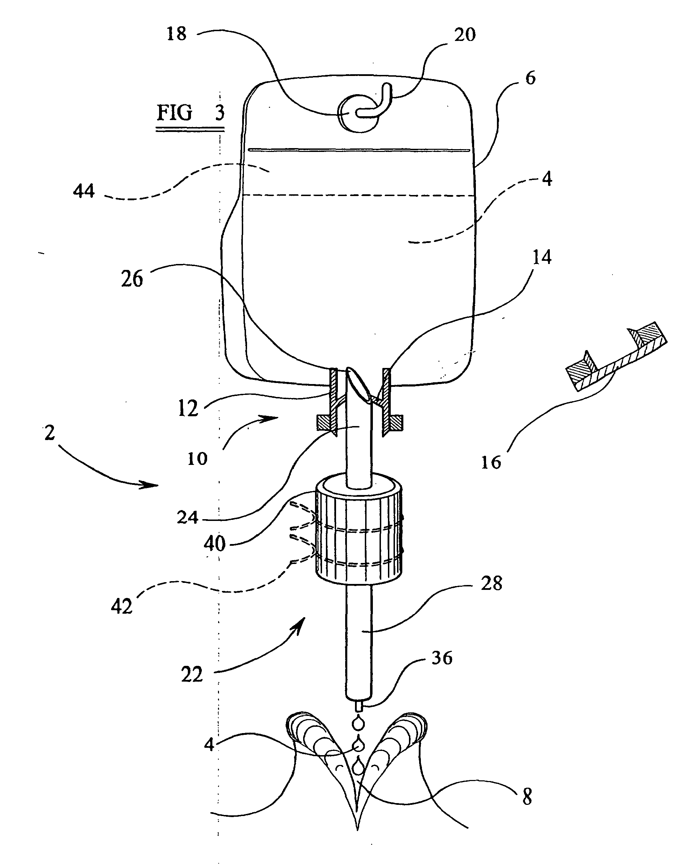

Referring now to Figure 3, the cap 16 on the seal means 10 is removed and the valve arrangement 22 is fitted to the container 6 by holding the finger grip arrangement 40 and piercing the membrane or septum 14 of the seal means 10 by pushing through it the sharply angled or pointed region 26 at the end of the first tube portion 24. The first tube portion 24 forms a sealed interference fit in the hole formed by piercing the membrane or septum 14 such that no leakage of liquid 4 occurs between the membrane or septum 14 and an exterior of the first tube portion 24.

The valve arrangement 22 is suitably secured directly or indirectly to a structure, such as a cage associated with the animal. Such securing may simply comprise the support means 20 of the container 6. However, one or more other arrangements, such as clips 42, may be used to secure the valve arrangement 22.

When the mouth 8 of the animal contacts the end 36 of the pin 30 of the valve means, to open the valve means, liquid 4 is dispensed from the container 6 through the valve arrangement 22 and into the mouth 8 of the animal. Such flow of liquid 4 continues until contact by the animal with the end 36 of the pin 30 ceases. As the liquid 4 is drawn from the container 6, the flexible nature of the material of the container 6 allows the container to collapse under atmospheric pressure, as denoted by reference numeral 44. As a result, no vacuum is created inside the container 6 and any tendency for contaminants, such as air, or liquid or food debris from the mouth 8 of the animal, to be drawn back into the container 6 is minimised. Thus the liquid 4 in the container remains fresh at all times and can be completely used with safety.

The first tube portion 24 may be coaxially linearly aligned with the second tube portion 28, or may be arranged at an angle thereto as denoted by the dotted outline in Figure 1.

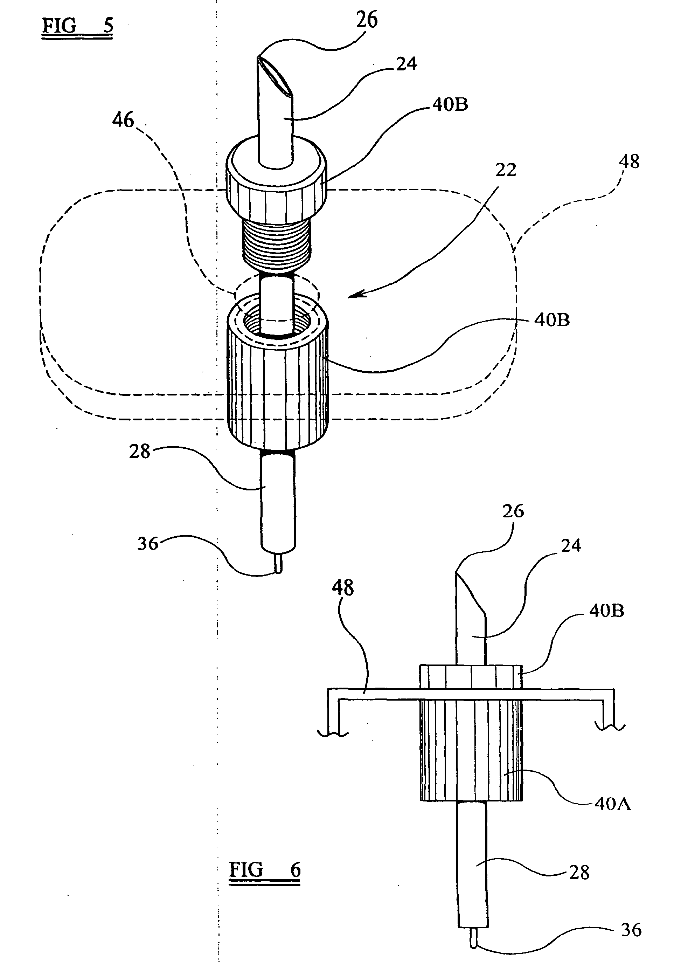

Instead of the end of the first tube portion 24 of the valve arrangement 22 having a single sharply angled or pointed region 26, it could be provided with a plurality of angled or pointed regions 26A, as shown in Figure 4.

The finger grip arrangement 40, which is suitably concentrically arranged on the valve arrangement 22, may comprise two threadedly-engaging portions 40A, 40B, of cap or ferrule form, as shown in Figures 5 and 6. The portions 40A and 40B can be disengaged from one another to separate into two component parts. One of the component parts can be arranged at one side of a support 48 and the other component part can be arranged at the other side of the support 48 with the valve arrangement 22 passing through the component parts 40A and 40B and through an aperture 46 in the support 48. Such support 48 may be a portion of a cage for containing the animal, or a bracket or cradle, such as for securing to the cage.

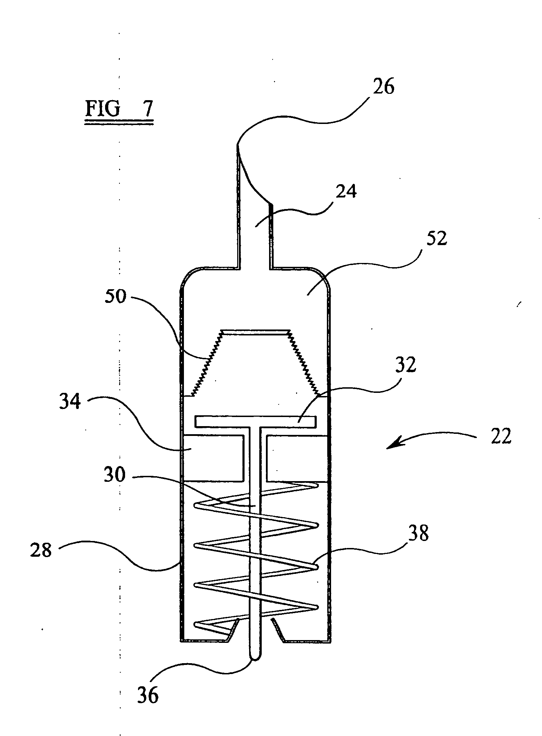

The valve arrangement 22 is suitably dimensioned to suit the size and drinking requirements of the animal. The valve arrangement 22 shown in Figures 1 to 6 is of small size and is particularly suited to small animals, such as mice and rats, with small mouths and requiring low rates of flow and/or volume of the liquid 4. Larger animals, such as rabbits and primates, have larger mouths and also may require higher rates of flow and/or volume of the liquid 4. To meet such requirements a valve arrangement 22 such as shown in Figure 7 can be provided, having a larger second tube portion 28 incorporating larger internal valve means 32, 34. Such larger second tube portion 28 is suitably threaded at a region 50 onto a component 52 incorporating the first tube portion 24. Again, a support (not shown) can be provided between the two threaded portions.

Alternative forms of valve means within the valve arrangement to that described hereinbefore may be used in a valve arrangement and an assembly according to the present invention. For example, a non-return valve of a type known to a person skilled in the art may be used which is activated by an animal and is adapted to permit flow of the liquid through the valve arrangement from the container towards the animal but to detect and prevent any flow of the liquid from the animal back to the container, thus preventing potentially contaminated liquid and entrained air entering the container.

Although the bag-form container is described as being formed of a flexible plastics material, it should be appreciated that other flexible materials, for example rubber, treated paper and cardboard, cloth or fibre materials, could be used to produce a sealed container such that as liquid is removed therefrom, the container collapses under atmospheric pressure.

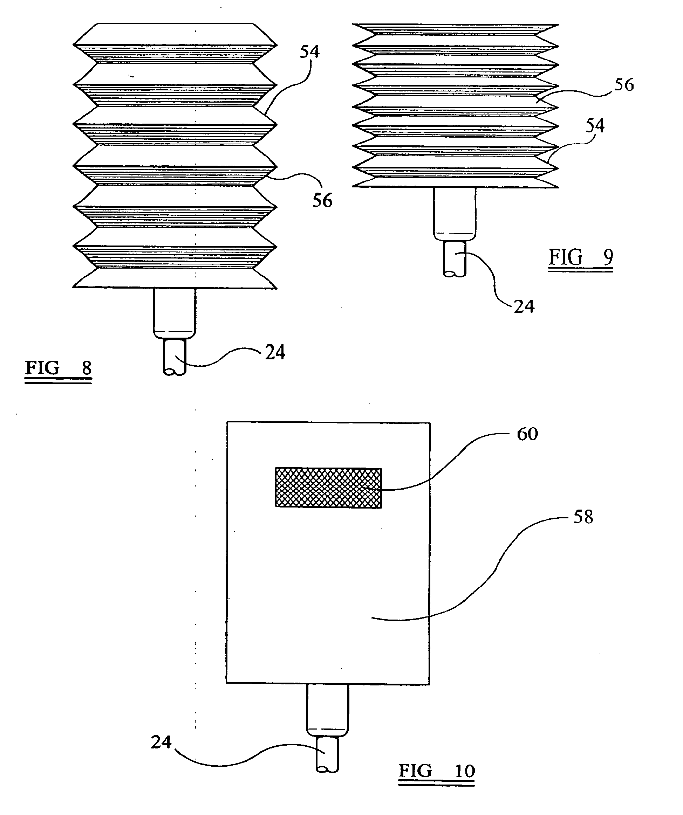

Although the container has been described as a bag-form which is collapsible in use, it should be appreciated that other forms of container may be used. For example, as shown in Figure 8, a container 54 formed from a rigid material, for example a plastics material, can be used where the container is provided with a pleated surface 56. As shown in Figure 9 the pleated surface allows adjacent portions of the container to move towards each other under atmospheric pressure, thus reducing the internal volume of the container. As a result, no vacuum is created inside the container 54 and any tendency for contaminants, such as air, or liquid or food debris from the mouth of the animal, to be drawn back into the container 54 is minimised.

Alternatively, as shown in Figure 10, a rigid container 58, could be used which is provided with a filtered vent 60, preferably incorporating a Hepa filter as known to a person skilled in the art, such that any vacuum created inside the container is relieved.

The finger grip arrangement has been described as comprising two threadedly-engaging portions 40A, 40B, of cap or ferrule form which can be arranged either side of a support to position the valve arrangement in relation to a cage containing an animal. It should be appreciated that alternative means for positioning the valve arrangement relative to the cage could be used. For example, a grommet, such as of rubber or plastics material, could be secured to the valve arrangement by means of washers, such as star washers. The grommet is adapted to form a seal with an aperture in a support, for example a portion of the cage or a bracket secured to the cage with the valve arrangement passing through the grommet and the aperture.

## Claims

1. An animal feeding assembly (2) for dispensing a liquid (4) from a container (6, 54, 58) to a mouth (8) of an animal, on demand of the animal, **characterised in that** the assembly comprises: a sealed container (6, 54, 58) at least partially filled with the liquid (4), the container (6, 54, 58) including a connecting tube (12) extending from the container (6, 54, 58), the connecting tube containing a seal means (10) in the form of a membrane (14); and an animal feeding valve arrangement fitted thereto, the valve arrangement comprising a first tube portion (24) piercing the membrane of the seal means (10) of the container (6, 54, 58) to receive the liquid (4) from the container (6, 54, 58), a second tube portion (28) provided with an end adapted to be used by the animal, and a valve means adapted to be actuated by the animal to permit the flow of the liquid (4) from the container (6, 54, 58) to the end of the second tube portion (28).

2. An assembly as claimed in claim 1, **characterised in that** the container (6, 54) is adapted to collapse under atmospheric pressure as the liquid (4) is dispensed therefrom to the animal, for example the container (54) is made of a rigid material provided with a pleated surface (56) or alternatively the container (6) being of bag-form is made of a flexible material.

3. An assembly as claimed in claim 1 or 2, **characterised in that** the container (6, 54, 58) is hermetically sealed.

4. An assembly as claimed in claim 1, **characterised in that** the container (58) is of rigid form and includes a filtered vent, for example a Hepa filter, to relieve a vacuum created within the container (58) as the liquid (4) is dispensed therefrom to the animal.

5. An assembly as claimed in any preceding claim, **characterised in that** the container (6, 54, 58) is provided within an outer wrapping to maintain sterility of the container (6, 54, 58) prior to use.

6. An assembly as claimed in any preceding claim, **characterised in that** the container (6, 54, 58) is made of a material selected so as to be capable of being sterilised.

7. An assembly as claimed in any preceding claim, **characterised in that** the container (6, 54, 58) is provided with means (18) for suspending it from support means (20).

8. An assembly as claimed in any preceding claim, **characterised in that** the seal means (10) is covered with a removable cap (16) until access thereto for piercing is required.

9. An assembly as claimed in any preceding claim, **characterised in that** the container (6, 54, 58) is arranged to be secured to a structure, such as a cage, associated with the animal.

10. An assembly as claimed in any previous claim, **characterised in that** the valve arrangement is adapted to be secured to a structure, such as a cage associated with the animal, by means (42) selected from a clip, a ferrule, a threaded cap, a grommet, a washer, a bracket and a cradle.

11. An assembly as claimed in any preceding claim, **characterised in that** the first tube portion (24) of the valve arrangement has an end thereof shaped to form at least one sharply angled region (26), which sharply angled region (26) facilitates piercing of the membrane of the seal means of the container by the first tube portion (24).

12. An assembly as claimed in any preceding claim, **characterised in that** a finger grip arrangement (40) is provided on the valve arrangement to facilitate fitting of the valve arrangement to the container (6, 54, 58).

13. An assembly as claimed in any preceding claim, **characterised in that** the valve means comprises a non-return valve actuated by the animal and adapted to permit flow of the liquid (4) through the valve arrangement from the container (6, 54, 58) towards the animal but to prevent any flow of the liquid (4) from the animal to the container (6, 54, 58).

## Patentansprüche

1. Tierfüttervorrichtung (2) zum Ausgeben einer Flüssigkeit (4) aus einem Behälter (6, 54, 58) in ein Maul (8) eines Tieres auf Verlangen des Tieres, **dadurch gekennzeichnet, dass** die Vorrichtung Folgendes umfasst: einen dicht verschlossenen Behälter (6, 54, 58), der wenigstens teilweise mit der Flüssigkeit (4) gefüllt ist, wobei der Behälter (6, 54, 58) eine Verbindungsröhre (12) aufweist, die sich vom Behälter (6, 54, 58) erstreckt, wobei die Verbindungsröhre ein Dichtungsmittel (10) in der Form einer Membran (14) enthält; und eine daran angebrachte Tierfütterventilanordnung, wobei die Ventilanordnung einen ersten Röhrenabschnitt (24), der die Membran des Dichtungsmittels (10) des Behälters (6, 54, 58) zum Erhalten der Flüssigkeit (4) aus dem Behälter (6, 54, 58) durchsticht, einen zweiten Röhrenabschnitt (28), der mit einem zur Benutzung durch das Tier ausgeführten Ende versehen ist, und ein Ventilmittel, das zur Betätigung durch das Tier ausgeführt ist, um das Ausfließen der Flüssigkeit (4) aus dem Behälter (6, 54, 58) zum Ende des zweiten Röhrenabschnitts (28) zu erlauben.

2. Vorrichtung nach Anspruch 1, **dadurch gekennzeichnet, dass** der Behälter (6, 54) so ausgebildet ist, dass er beim Ausgeben der Flüssigkeit (4) aus ihm an das Tier unter atmosphärischem Druck einfällt, zum Beispiel ist der Behälter (54) aus einem mit einer gefalteten Oberfläche (56) versehenen steifen Material hergestellt oder alternativ ist der Behälter (6), der eine Beutelform hat, aus einem elastischen Material hergestellt.

3. Vorrichtung nach Anspruch 1 oder 2, **dadurch gekennzeichnet, dass** der Behälter (6, 54, 58) luftdicht verschlossen ist.

4. Vorrichtung nach Anspruch 1, **dadurch gekennzeichnet, dass** der Behälter (58) eine steife Form hat und eine mit Filter versehene Lüftungsöffnung, z.B. einen Feinstfilter, zum Abbauen eines Unterdrucks aufweist, der im Behälter (58) beim Ausgeben der Flüssigkeit (4) aus ihm an das Tier erzeugt wird.

5. Vorrichtung nach einem der vorhergehenden Ansprüche, **dadurch gekennzeichnet, dass** der Behälter (6, 54, 58) in einer äußeren Umhüllung zum Aufrechterhalten der Sterilität des Behälters (6, 54, 58) vor Gebrauch bereitgestellt ist.

6. Vorrichtung nach einem der vorhergehenden Ansprüche, **dadurch gekennzeichnet, dass** der Behälter (6, 54, 58) aus einem Material hergestellt ist, das so ausgewählt ist, dass er sterilisiert werden kann.

7. Vorrichtung nach einem der vorhergehenden Ansprüche, **dadurch gekennzeichnet, dass** der Behälter (6, 54, 58) mit einem Mittel (18) zum Aufhängen an einer Tragvorrichtung (20) versehen sein.

8. Vorrichtung nach einem der vorhergehenden Ansprüche, **dadurch gekennzeichnet, dass** das Dichtungsmittel (10) mit einer abnehmbaren Kappe (16) bedeckt ist, bis Zugang zu ihm zum Durchstechen erforderlich ist.

9. Vorrichtung nach einem der vorhergehenden Ansprüche, **dadurch gekennzeichnet, dass** der Behälter (6, 54, 58) zum Befestigen an einer Konstruktion wie einem mit dem Tier assoziierten Käfig angeordnet ist.

10. Vorrichtung nach einem der vorhergehenden Ansprüche, **dadurch gekennzeichnet, dass** die Ventilanordnung zum Befestigen an einer Konstruktion wie einem mit dem Tier assoziierten Käfig durch ein Mittel (42) ausgeführt ist, das aus einer Klammer, einer Hülse, einer Schraubkappe, einer Durchführung, einer Sicherungsscheibe, einer Halterung und einer Aufnahme ausgewählt ist.

11. Vorrichtung nach einem der vorhergehenden Ansprüche, **dadurch gekennzeichnet, dass** der erste Röhrenabschnitt (24) der Ventilanordnung ein Ende hat, das so gestaltet ist, dass es wenigstens eine scharf angewinkelte Region (26) bildet, wobei die scharf angewinkelte Region (26) das Durchstechen der Membran des Dichtungsmittels des Behälters durch den ersten Röhrenabschnitt (24) erleichtert.

12. Vorrichtung nach einem der vorhergehenden Ansprüche, **dadurch gekennzeichnet, dass** an der Ventilanordnung eine Griffflächenanordnung (40) zum Erleichtern der Anbringung der Ventilanordnung am Behälter (6, 54, 58) bereitgestellt ist.

13. Vorrichtung nach einem der vorhergehenden Ansprüche, **dadurch gekennzeichnet, dass** das Ventilmittel ein Rückschlagventil umfasst, das von dem Tier betätigt wird und so ausgebildet ist, dass es das Ausfließen der Flüssigkeit (4) aus dem Behälter (6, 54, 58) durch die Ventilanordnung in Richtung auf das Tier zulässt, aber jegliches Fließen der Flüssigkeit (4) vom Tier zum Behälter (6, 54, 58) verhindert.

## Revendications

1. Ensemble d'alimentation pour animaux (2) pour la distribution d'un liquide (4) à partir d'un conteneur (6, 54, 58) à une bouche (8) d'un animal, à la demande de l'animal, **caractérisé en ce que** l'ensemble comprend : un conteneur scellé (6, 54, 58) au moins partiellement rempli du liquide (4), le conteneur (6, 54, 58) comprenant un tube de connexion (12) s'étendant depuis le conteneur (6, 54, 58), le tube de connexion contenant un moyen d'étanchéité (10) sous la forme d'une membrane (14); et un agencement de clapet d'alimentation pour animaux qui y est ajusté, l'agencement de clapet comprenant une première portion de tube (24) perçant la membrane du moyen d'étanchéité (10) du conteneur (6, 54, 58) pour recevoir le liquide (4) à partir du conteneur (6, 54, 58), une seconde portion de tube (28) pourvue d'une extrémité adaptée à être utilisée par l'animal, et un moyen de clapet adapté à être actionné par l'animal pour permettre l'écoulement du liquide (4) à partir du conteneur (6, 54, 58) vers l'extrémité de la seconde portion de tube (28).

2. Ensemble selon la revendication 1, **caractérisé en ce que** le conteneur (6, 54) est adapté à plier sous la pression atmosphérique alors que le liquide (4) est distribué à partir de celui-ci à l'animal, par exemple le conteneur (54) est fabriqué en un matériau rigide pourvu d'une surface plissée (56) ou en variante, le conteneur (6) étant en forme de sac est fabriqué en un matériau flexible.

3. Ensemble selon la revendication 1 ou 2, **caractérisé en ce que** le conteneur (6, 54, 58) est scellé hermétiquement.

4. Ensemble selon la revendication 1, **caractérisé en ce que** le conteneur (58) est de forme rigide et comprend un évent filtré, par exemple un filtre Hepa, pour soulager un vide créé à l'intérieur du conteneur (58) alors que le liquide (4) est distribué à partir de celui-ci à l'animal.

5. Ensemble selon l'une quelconque des revendications précédentes, **caractérisé en ce que** le conteneur (6, 54, 58) est prévu à l'intérieur d'un emballage externe pour maintenir la stérilité du conteneur (6, 54, 58) avant utilisation.

6. Ensemble selon l'une quelconque des revendications précédentes, **caractérisé en ce que** le conteneur (6, 54, 58) est fabriqué en un matériau sélectionné de manière à être capable d'être stérilisé.

7. Ensemble selon l'une quelconque des revendications précédentes, **caractérisé en ce que** le conteneur (6, 54, 58) est pourvu de moyens (18) pour le suspendre à partir de moyens de support (20).

8. Ensemble selon l'une quelconque des revendications précédentes, **caractérisé en ce que** le moyen d'étanchéité (10) est recouvert d'un capuchon amovible (16) jusqu'à ce que son accès pour le percement soit requis.

9. Ensemble selon l'une quelconque des revendications précédentes, **caractérisé en ce que** le conteneur (6, 54, 58) est agencé pour être fixé à une structure, telle qu'une cage, associée à l'animal.

10. Ensemble selon l'une quelconque des revendications précédentes, **caractérisé en ce que** l'agencement de clapet est adapté à être fixé à une structure, telle qu'une cage associée à l'animal, par des moyens (42) sélectionnés parmi un clip, une virole, un capuchon fileté, un guide, une rondelle, un support et un arceau.

11. Ensemble selon l'une quelconque des revendications précédentes, **caractérisé en ce que** la première portion de tube (24) de l'agencement de clapet possède une de ses extrémités formée pour former au moins une région à angle aigu (26), laquelle région à angle aigu (26) facilite le percement de la membrane du moyen d'étanchéité du conteneur par la première portion de tube (24).

12. Ensemble selon l'une quelconque des revendications précédentes, **caractérisé en ce qu'**un agencement de passe-main (40) est prévu sur l'agencement de clapet pour faciliter l'ajustement de l'agencement de clapet au conteneur (6, 54, 58).

13. Ensemble selon l'une quelconque des revendications précédentes, **caractérisé en ce que** le moyen de clapet comprend un clapet anti-retour actionné par l'animal et adapté à permettre l'écoulement du liquide (4) à travers l'agencement de clapet à partir du conteneur (6, 54, 58) vers l'animal mais à empêcher tout écoulement du liquide (4) de l'animal vers le conteneur (6, 54, 58).
